# EUROPEAN PATENT APPLICATION

(11) **EP 1 266 579 A1**
(43) Date of publication of application: **18.12.2002**
(21) Application number: 02077313.1
(22) Date of filing: 11.06.2002
(51) Int. Cl.: A23K 3/02, A23B 7/148, A23L 3/3418

(54) **Animal feedstuff for domestic animals, and method for packing an animal feedstuff**

(30) Priority: 14.06.2001 NL 1018288; 13.03.2002 NL 1020163
(71) Applicant: V.O.F. Handelsonderneming RUVO, 2133 MJ Hoofddorp (NL)
(72) Inventor: Vogelaar, Adriaan Pieter, 2151 GM Nieuw Vennep (NL)
(74) Representative: Uittenbogaart, Gustaaf Adolf

(57) **Abstract**

The invention relates to an animal feedstuff for domestic animals, comprising a pack with plant parts, in which the pack comprises a mixture of at least two or three types of crops and/or moisture-containing crop parts such as parts of leaves, stalks, fruits, tubers and flowers. The crops and/or moisture-containing crop parts are combined in the pack immediately after being made fit for consumption. It has been found that the animal feedstuff has a therapeutic effect.

## Description

The invention relates to an animal feedstuff for domestic animals according to the preamble of Claim 1. Such animal feedstuffs are known, for example from Patent Application WO 9711840 of the same applicant. This application discloses a pack of compressed hay, which can be fed to domestic animals. The disadvantage of the known animal feedstuff is that the composition is unbalanced because only one crop is included in the pack. Another disadvantage of the known animal feedstuff is that the crop is dried, with the result that a number of important substances are no longer available.

In order to avoid these disadvantages, the animal feedstuff is produced according to the characterizing part of Claim 1. As a result of this, the animal feedstuff contains a mixture of juicy and/or moisture-rich plant parts consisting of different types of crops, and the domestic animal receives a complete diet.

According to an improvement, the animal feedstuff is produced according to Claim 2. As a result of this, a mixture of juicy and moisture-rich plant parts is obtained, and can be fed to the domestic animal in a fresh state.

According to an improvement, the animal feedstuff is produced according to Claim 3. As a result of this, a mixture in which many different types of substances are present is obtained, which is beneficial to the health of the domestic animal.

According to a further improvement, the animal feedstuff is produced according to Claim 4. As a result of this, it is ensured that sufficient original juice is present in the animal feedstuff, so that no substances are lost.

The invention also comprises an animal feedstuff according to the preamble of Claim 5. It has been found that domestic animals kept in hutches or cages and being fed a dry feed menu are generally being given feed that is too unbalanced, with the result that the animals become less lively. When an animal feedstuff according to Claim 5 is used, it is found that the animals become livelier. The animal feedstuff according to the invention is therefore found to be a supplement to the conventional diet, which makes up for substances missing in the ordinary menu and consequently has a therapeutic effect on listless animals.

According to an improvement, the animal feedstuff is produced according to Claim 6. As a result of this, a mixture of juicy and/or moisture-rich plant parts is obtained, and can be given to the domestic animal in a fresh state.

According to an improvement, the animal feedstuff is produced according to Claim 7. As a result of this, a mixture of many different substances is obtained, which is better for combating the listlessness of the domestic animal.

According to a further improvement, the animal feedstuff is produced according to Claim 8. As a result of this, it is ensured that the domestic animal receives a feedstuff with as many of the original juices as possible.

The invention also comprises a method according to the preamble of Claim 9. The disadvantage of such a known method, in which the packed plant parts are harvested and packed in one go, is that largely one type of crop is present in the pack, or if one or more types are present, one type of crop is not yet ripe or fit for consumption, while another type may already have seeded. In order to avoid this disadvantage, the method is carried out according to Claim 9. As a result of this, it is ensured that the packed plant parts of the different types of plants are all at their best for consumption and therefore also contain the best nutrients.

According to an improvement, the method is carried out according to Claim 10. As a result of this, the plant parts are packed in a simple manner.

According to an improvement, the method is carried out according to Claim 11. As a result of this, the evaporation of juices from the plant parts is prevented, so that freshness is guaranteed for a longer time.

According to a further improvement, the method is carried out according to Claim 12. As a result of this, the freshness is further extended in a simple manner.

The invention is illustrated below with reference to a number of exemplary embodiments and for different kinds of domestic animals.

Suitable plants, such as dandelion, for feeding rodents such as rabbits are grown in a field. These plants are harvested by cutting leaves and, if desired, a part of the stalk from the root. The leaves and stalk parts are collected, washed and, if desired, cut into small pieces. If desired, parts of other crops such as carrots cut into small pieces may be added to the leaves and stalk parts, so that a mixture of feedstuffs is obtained. In addition to parts of the dandelion or carrot, leaves, stalks or blossoms of clover, grass, thyme, mint or cabbage may be added if desired.

The plant parts suitable for rodents are subsequently packed in a transparent bag, which if desired may be printed with instructions for use and also, for example, the date of packing or the 'use by' date. The bag is made of a film that is composed of, for example, a layer of polyethylene and a layer of polypropylene. Choosing the different types of films and their thickness ensures that the bag is more or less gastight and, if desired, partially permeable to certain gases. After the plant parts have been placed in the bag, the bag is sealed. During the sealing operation, the bag is filled in a known manner with a preserving gas such as carbon dioxide (CO₂), nitrogen (N₂) and/or oxygen (O₂), so that the freshness of the packed plant parts is extended and they are prevented as far as possible from drying out. After packing, the pack is kept in cold storage if desired, at a temperature above freezing point, and preferably colder than 6 degrees Celsius.

The bags with feedstuffs suitable for rodents, consisting of freshly cut plant parts, are provided with a transport pack if desired and subsequently transported, by refrigerated transport if necessary, to a shop. In the shop the feedstuffs suitable for domestic animals are placed in a separate compartment with feedstuffs suitable for domestic animals and offered for sale. The compartment may be refrigerated if desired.

Owing to the fact that the plant parts intended for rodents have been carefully packed, it is hygienic to store these plant parts in the family refrigerator until they are going to be used. This makes it possible in a simple manner to provide a rodent with fresh plant parts, even in the winter and even if the keeper of the rodent does not have at his disposal a field in which suitable plants grow.

In another embodiment, in order to ensure an uninterrupted supply of plant parts of various types, these plant parts are specially grown in greenhouses equipped for the purpose. Dandelion and also clover, parsley, dill and barley grass are grown in the greenhouses. These crops are intended for rodents and possibly plant-eating reptiles. The time needed by these different crops from germination until the harvesting stage differs, and the conditions in which these different crops reach the harvesting stage may also differ. During the growing of these crops the conditions are adapted to the differing requirements. At a certain time the crops ready for harvesting are harvested and/or the desired parts such as leaves or stalks of the plants are harvested, after which new leaves or stalks may grow on again. The harvested plant parts are subsequently mixed in a specific proportion.

With regard to the abovementioned plants, it is known that dandelion purifies the blood, that clover is medicinal, that parsley is rich in vitamins A and C, that dill may be fever-reducing, and that barley grass contains vitamins B1, B2, B6 and C, in addition to beta-carotene. In the feeding of rodents it has been found that feeding the fresh plant parts of the abovementioned plants has a positive effect on health. This is probably because all juices that were present in the plant parts at the time of harvesting are also still present at the time of consumption by the animals. After eating the fresh mixture of plant parts for a few days, listless animals are found to become lively again. Obviously, there are materials in the mix that are missing from the ordinary dry feed. The enthusiasm with which the animals eat the fresh juice-containing or moisture-containing feed is striking in this case. It is clear here that supplementing a diet of seeds and dry feed, such as hay, with juice-containing or moisture-containing crops is an improvement and also has a therapeutic effect.

In order to ensure that the mixture of harvested crops reaches the domestic animals by way of the consumer in a fresh composition, the crops are mixed in the desired proportion after harvesting and packed between two layers of transparent film. The film is preferably permeable to the gases secreted and/or absorbed by the living plants. Each pack contains approximately 40 grams of crop, which is usually sufficient for one domestic animal for a week. The film is closed by welding and/or heating the edges, if desired after a preserving gas has been introduced. After the packing, the packed products are transported to shops. The products may, if desired, be refrigerated during transport and storage, so that spoilage of the crops is slowed down. In practice, it is found that the shelf life of the harvested product is 10 - 14 days, so that it is possible in a simple manner to provide the animals with a mixture of plant parts that are sufficiently fresh.

In addition to the specific mixture of plant parts described above, mixtures for other types of animals can also be composed and put on sale fresh in the supermarket. A mixture suitable for birds such as parakeets and parrots is composed, for example, of a fruit mix, pieces of orange and apple and/or nuts, and other plant parts if desired. For fish such as goldfish, the plant parts are parts of the plant varieties Denza and Cabomba. As a result, it is always possible to provide the different types of domestic animals with the fresh feed that is most suitable for them.

## Claims

1. Animal feedstuff for domestic animals, comprising a pack with plant parts, **characterized in that** the pack comprises a mixture of at least two or three types of crops and/or moisture-containing crop parts such as parts of leaves, stalks, fruits, tubers and flowers and the like.

2. Animal feedstuff according to Claim 1, in which, after growing separately, the crops and/or moisture-containing crop parts are combined in the pack immediately after harvesting and/or after being made fit for consumption.

3. Animal feedstuff according to Claim 1 or 2, in which the mixture is composed of at least two or three of the following types: dandelion, clover, parsley, dill and barley grass.

4. Animal feedstuff according to Claim 2 or 3, in which the crops and/or moisture-containing crop parts in the pack have the same dry matter content as at the time of harvesting.

5. Animal feedstuff for combating listlessness in the case of domestic animals kept in hutches or cages, comprising a pack with plant parts, **characterized in that** the pack comprises a mixture of at least two or three types of crops and/or moisture-containing crop parts such as parts of leaves, stalks, fruits, tubers and flowers and the like.

6. Animal feedstuff according to Claim 5, in which, after growing separately, the crops and/or moisture-containing crop parts are combined in the pack immediately after harvesting and/or after being made fit for consumption.

7. Animal feedstuff according to Claim 5 or 6, in which the mixture is composed of parts of at least two or three of the types: dandelion, clover, parsley, dill and barley grass.

8. Animal feedstuff according to Claim 5 or 6, in which the crops and/or moisture-containing crop parts in the pack have the same dry matter content as at the time of harvesting.

9. Method for packing an animal feedstuff in which plant parts are packed directly after harvesting, **characterized in that** at least two or three types of crops and/or moisture-containing crop parts such as parts of leaves, stalks, fruits, tubers, flowers and the like are grown in the conditions and/or growing period suitable for each crop until ready for harvesting, the crops and/or moisture-containing crop parts are harvested on approximately the same day and/or are made fit for consumption, after which the crops and/or moisture-containing crop parts are packed.

10. Method according to Claim 9, in which the crops and/or moisture-containing crop parts are packed in a preferably transparent plastic film by welding and/or heating the edges of the film.

11. Method according to Claim 9 or 10, in which the pack is filled with a preserving gas before it is closed.

12. Method according to one of Claims 9, 10 or 11, in which the packed animal feedstuffs are stored and/or transported in a refrigerated state.
